# EUROPEAN PATENT SPECIFICATION

(11) **EP 4 389 585 B1**
(45) Date of publication and mention of the grant of the patent: **23.04.2025**
(21) Application number: 22872451.4
(22) Date of filing: 28.04.2022
(51) Int. Cl.: B63B 11/04, B63B 25/08, B63B 25/16, B63B 35/44, B65D 90/22, F17C 13/00

(54) **FLOATING STRUCTURE**
SCHWIMMSTRUKTUR
STRUCTURE FLOTTANTE

(30) Priority: 22.09.2021 JP 2021153786
(43) Date of publication of application: 26.06.2024
(73) Proprietor: Mitsubishi Shipbuilding Co., Ltd., Yokohama-shi Kanagawa 220-8401 (JP)
(72) Inventor: YOSHINO Seigo, Yokohama-shi, Kanagawa 220-8401 (JP); MORIMOTO Shinsuke, Yokohama-shi, Kanagawa 220-8401 (JP)
(74) Representative: Studio Torta S.p.A.
(86) International application number: PCT/JP2022/019355
(87) International publication number: WO 2023/047692

(56) References cited:
- JP-A- 2018 079 834
- JP-A- S5 179 490
- JP-A- S5 817 297
- JP-B2- 6 793 015
- JP-U- S5 057 176
- JP-U- S5 057 176
- JP-U- S5 393 897
- JP-U- S5 595 995
- JP-U- S5 595 995
- JP-U- S5 737 098
- JP-U- S5 737 098
- JP-U- S5 741 598
- JP-U- S5 741 598

## Description

### Technical Field

### Background Art

PTL 1 discloses an invention of a liquid leakage prevention device for a storage tank that accommodates liquid, such as caustic soda or ammonia water, to be supplied into a cylinder to neutralize sulfuric acid to be used for exhaust gas recirculation (EGR). In a technique disclosed in PTL 1, liquid having leaked from the storage tank is recovered in a coaming space.

Incidentally, a liquefied gas carrier that uses liquefied gas, such as liquefied petroleum gas (LPG), liquefied natural gas (LNG), or ammonia, as fuel or cargo is provided with a liquefied gas tank for storing the liquefied gas. Even in such a liquefied gas tank, as in the storage tank disclosed in PTL 1, measures are taken on the assumption that the liquefied gas, which is liquid stored in the liquefied gas tank, leaks to the outside of the liquefied gas tank. For example, since a liquefied gas carrier that carries liquefied gas as cargo often includes a plurality of cargo tanks, a method of introducing liquefied gas having leaked from one cargo tank into the other cargo tank to recover the liquefied gas having leaked has been performed in the related art.

### Citation List

### Patent Literature

[PTL 1] Japanese Unexamined Patent Application Publication No. 2018-79834;
[PTL 2] JP S57-37098 U;
[PTL 3] JP S57-41598 U;
[PTL 4] JP S55-95995 U;
[PTL 5] JP 6793015 B2; and
[PTL 6] JP S50-57176 U.

### Summary of Invention

### Technical Problem

On the other hand, there is a case where a plurality of liquefied gas tanks are not provided in the case of a liquefied gas fueled ship using liquefied gas as fuel unlike in the above-mentioned liquefied gas carrier. In the case of a ship not including such a plurality of liquefied gas tanks, liquid having leaked cannot be introduced from one tank into the other tank unlike the disclosure in PTL 1. For this reason, there is a problem that liquefied gas having leaked cannot be efficiently recovered.

The present disclosure has been made to solve the problem, and an object of the present disclosure is to provide a floating structure that can efficiently recover liquefied gas having leaked from a tank.

### Solution to Problem

In order to solve the problem, a floating structure according to an aspect of the present disclosure includes a floating main structure, a tank that is provided in the floating main structure and includes a tank body capable of storing liquefied gas therein and a heat shield wall covering an outer surface of the tank body, a receiving part that is disposed below the tank to cover the tank from below and includes a receiving surface and a recess recessed from the receiving surface, a pump that is provided in the recess; and a return line that returns the liquefied gas pumped by the pump into the tank body.

### Advantageous Effects of Invention

According to the present disclosure, it is possible to provide a floating structure that can efficiently recover liquefied gas having leaked from a tank.

### Brief Description of Drawings

Fig. 1 is a side view of a floating structure according to an embodiment of the present disclosure.
Fig. 2 is a diagram showing the configuration of a fuel storage unit according to the embodiment of the present disclosure.
Fig. 3 is a diagram showing the configuration of a fuel storage unit according to another embodiment of the present disclosure.

### Description of Embodiments

A floating structure according to an embodiment of the present disclosure will be described below with reference to the drawings.

### (Configuration of floating structure)

The floating structure according to the present embodiment is a liquefied gas fueled ship that uses liquefied gas as fuel. More specifically, the floating structure according to the present embodiment is an ammonia fueled ship that uses ammonia, which is liquefied gas, as fuel. The ammonia fueled ship will be described as an example in the present embodiment as described above, but the type of the floating structure is not limited to a specific one. Examples of the type of the floating structure include a liquefied gas carrier, a ferry, a RO-RO ship, a vehicle carrier, a passenger ship, and the like.

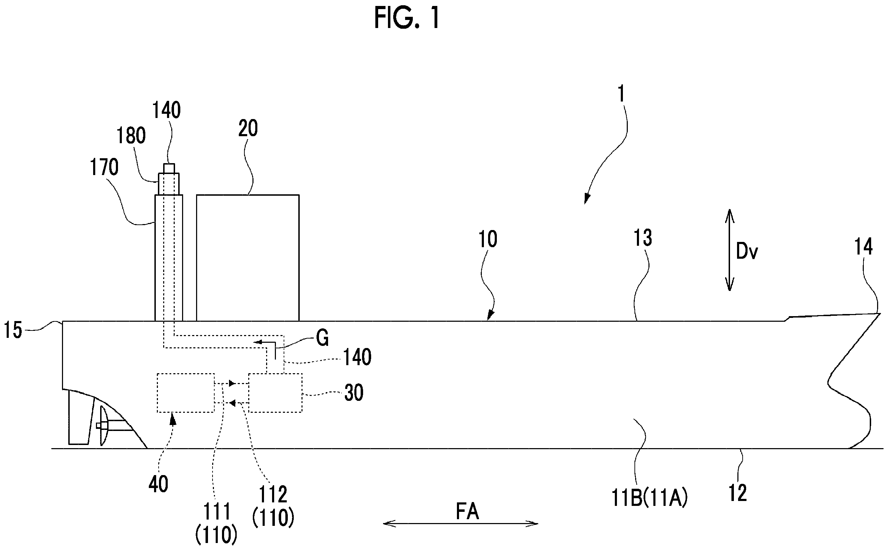

As shown in Fig. 1, the floating structure 1 includes a floating main structure 10, a superstructure 20, a combustion device 30, a fuel storage unit 40, and a fuel supply system 110.

### (Floating main structure)

As shown in Fig. 1, the floating main structure 10 includes at least ship sides 11A and 11B, a bottom 12, and an upper deck 13.

The ship sides 11A and 11B include a pair of ship side skins that forms left and right ship sides 11A and 11B, respectively. The bottom 12 includes a double-bottomed bottom skin that connects these ship sides 11A and 11B. The upper deck 13 is provided over the pair of ship side skins.

An outer shell of the floating main structure 10 is formed by the ship sides 11A and 11B, the bottom 12, and the upper deck 13 to have a box shape in a cross-sectional view orthogonal to a bow-stern direction FA.

Hereinafter, a direction extending from a stern 15 of the floating main structure 10 to a bow 14 thereof will be referred to as "bow-stern direction FA".

### (Superstructure)

The superstructure 20 is a structure that is provided to face upward from the upper deck 13 in a vertical direction Dv. For example, an accommodation space, a bridge, and the like are provided in the superstructure 20.

### (Combustion device)

The combustion device 30 is a device that generates thermal energy by combusting fuel. The combustion device 30 is provided in, for example, a compartment, such as an engine room (not shown) provided inside the floating main structure 10. A main engine that propels the floating structure 1, an engine for a generator that supplies electricity to the inside of the ship, a boiler that generates steam as working fluid, and the like can be exemplified as the combustion device 30. The combustion device 30 of the present embodiment is a main engine that uses ammonia as fuel.

### (Fuel storage unit)

The fuel storage unit 40 stores liquefied ammonia as the fuel of the combustion device 30 in a low-temperature state.

The detailed configuration of the fuel storage unit 40 will be described later.

### (Fuel supply system)

The fuel supply system 110 is a system that supplies ammonia as fuel to the combustion device 30 from the fuel storage unit 40. The fuel supply system 110 of the present embodiment is provided in, for example, the floating main structure 10.

The fuel supply system 110 includes a supply line 111 (another line) and a return line 112 (another line). The supply line 111 and the return line 112 are pipes which are connected to a tank 41 and in which ammonia can flow.

The supply line 111 connects the tank 41 (of which details will be described later) of the fuel storage unit 40 and the combustion device 30. Ammonia as fuel flows from the tank 41 toward the combustion device 30 in the supply line 111. Accordingly, ammonia is introduced into the combustion device 30 from the tank 41 via the supply line 111.

The supply line 111 is provided with a pump (not shown) that pumps ammonia into the combustion device 30 from the tank 41, a heat exchanger (not shown) that heats ammonia to be guided to the combustion device 30 by the pump and present in the supply line 111, and the like.

The return line 112 connects the combustion device 30 and the tank 41 of the fuel storage unit 40. One end of the return line 112 is connected to the combustion device 30, and the other end thereof is connected to the tank 41. Ammonia, which remains without being combusted in the combustion device 30, flows from the combustion device 30 toward the tank 41 in the return line 112. Accordingly, ammonia sent to the tank 41 via the return line 112 is supplied into the supply line 111 in the tank 41 again, and is used for combustion in the combustion device 30 again.

One end of a flue gas duct 140, which is a duct for guiding exhaust gas G generated in the combustion device 30 to the outside of the floating main structure 10, is connected to the combustion device 30. The other end of the flue gas duct 140 penetrates the upper deck 13 and extends upward in the vertical direction Dv outside the floating main structure 10. As shown in Fig. 1, a portion of the flue gas duct 140, which extends outside the floating main structure 10, is surrounded by a hull structure 170 and a funnel 180.

### (Fuel storage unit)

The fuel storage unit 40 of the present embodiment is provided in the floating main structure 10.

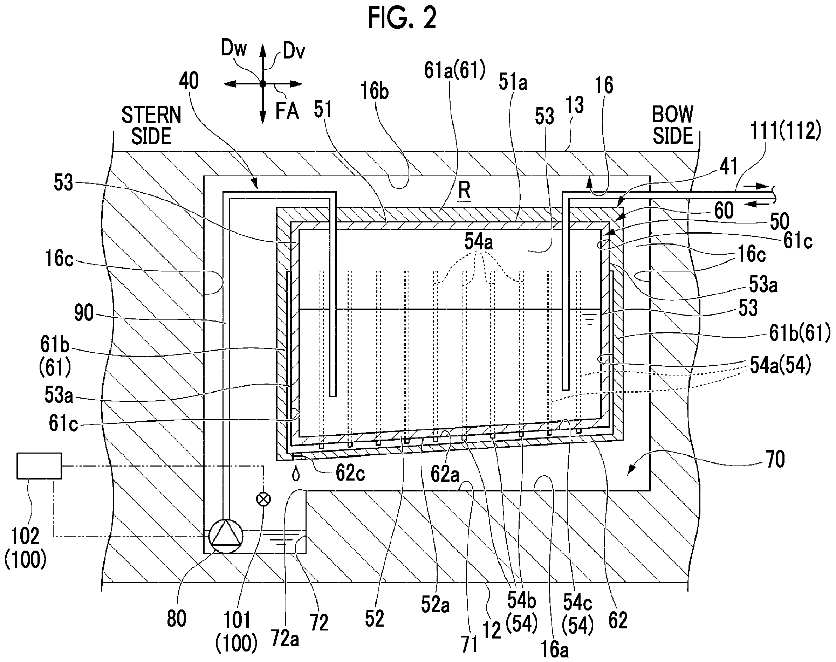

As shown in Fig. 2, the fuel storage unit 40 includes the tank 41, a receiving part 70, a pump 80, a return line 90, and a leak detecting unit 100.

Here, the floating main structure 10 further includes an inner surface 16 that partitions off a hold space R as a space in which the tank 41 is accommodated. That is, the tank 41 is provided in the hold space R partitioned off by the inner surface 16. The inner surface 16 of the present embodiment is formed by, for example, a bulkhead that is provided in the floating main structure 10, or the like. For the convenience of description, the shape and the like of the bulkhead forming the inner surface 16 are not shown in Fig. 2.

The inner surface 16 of the floating main structure 10 includes a floor surface 16a that corresponds to a bottom surface portion of the inner surface 16, a top surface 16b that is provided above the floor surface 16a in the vertical direction Dv and faces the floor surface 16a, and side surfaces 16c that connect the floor surface 16a and the top surface 16b in the vertical direction Dv. That is, the top surface 16b corresponds to a ceiling surface portion of the inner surface 16, and the side surfaces 16c correspond to side surface portions of the inner surface 16.

The inner surface 16 includes a total of four side surfaces 16c, that is, two side surfaces 16c that face each other in the bow-stern direction FA, and two side surfaces 16c that face each other in a ship width direction Dw extending from one ship side 11A toward the other ship side 11B. One side surface of the two side surfaces 16c facing each other in the ship width direction Dw is not shown in Fig. 2 due to space limitations.

The two side surfaces 16c facing each other in the bow-stern direction FA stand up in the vertical direction Dv from the respective end portions of the floor surface 16a in the bow-stern direction FA, and are connected to end portions of the top surface 16b in the bow-stern direction FA, respectively. The two side surfaces 16c facing each other in the ship width direction Dw stand up in the vertical direction Dv from the respective end portions of the floor surface 16a in the ship width direction Dw, and are connected to end portions of the top surface 16b in the ship width direction Dw, respectively.

### (Tank)

The tank 41 is an IMO Type B tank that stores liquefied ammonia as fuel for the combustion device 30. Here, IMO Type B is defined by an International Gas Carrier (IGC) code that is a safety regulation for liquefied gas established by the International Maritime Organization (IMO). Specifically, in the IMO Type B tank, an upper limit of the amount of liquefied gas fuel leaking from the inside of the tank per unit time is calculated on the basis of a predetermined calculation method.

The tank 41 includes a tank body 50 and a heat shield wall 60.

In Fig. 2, for convenience, the supply line 111 (another line) that supplies ammonia from the tank 41 to the combustion device 30 and the return line 112 (another line) that returns ammonia from the combustion device 30 to the tank 41 are shown as the same line.

The tank body 50 stores ammonia therein. The tank body 50 of the present embodiment is made of, for example, low-temperature steel of which toughness is not reduced even in a low-temperature state, such as nickel steel, stainless steel or an aluminum alloy. The tank body 50 of the present embodiment is made of a material of which toughness is not reduced in a temperature range lower than -30°C and equal to or higher than -40°C that is about -33.34°C which is a temperature at which ammonia is condensed.

The tank body 50 includes a ceiling portion 51, a bottom portion 52, and side wall portions 53.

The ceiling portion 51 forms a ceiling portion of the tank body 50. The ceiling portion 51 includes an upper surface 51a that faces upward in the vertical direction Dv in the hold space R.

The bottom portion 52 forms a bottom portion of the tank body 50. The bottom portion 52 includes a bottom surface 52a that is provided below the ceiling portion 51 in the vertical direction Dv in the hold space R and faces the floor surface 16a.

The side wall portions 53 connect the ceiling portion 51 and the bottom portion 52 in the vertical direction Dv, and form side wall portions of the tank body 50. That is, the side wall portions 53 include side surfaces 53a that connect the upper surface 51a of the ceiling portion 51 and the bottom surface 52a of the bottom portion 52.

Specifically, the side wall portions 53 include four side surfaces 53a that face the four side surfaces 16c of the inner surface 16, respectively.

Accordingly, an outer surface of the tank body 50 is formed of the upper surface 51a of the ceiling portion 51, the side surfaces 53a of the side wall portions 53, and the bottom surface 52a of the bottom portion 52.

The heat shield wall 60 is a heat insulating member that covers the outer surface of the tank body 50. The heat shield wall 60 suppresses natural heat input into the tank body 50 from the atmosphere in the hold space R.

The heat shield wall 60 includes a heat shield portion 61 and a guide portion 62.

The heat shield portion 61 covers the entire upper surface 51a and the entire side surfaces 53a of the outer surface of the tank body 50 from the outside. The heat shield portion 61 insulates the tank body 50 so that heat is not conducted to the tank body 50 from the atmosphere in the hold space R. That is, the heat shield portion 61 fulfills a heat insulating function to prevent natural heat from being input to the tank body 50. The heat shield portion 61 of the present embodiment is made of, for example, a material, such as polyurethane foam.

The heat shield portion 61 includes a ceiling-heat shield portion 61a and side wall-heat shield portions 61b.

The ceiling-heat shield portion 61a is formed to cover the entire upper surface 51a of the ceiling portion 51 of the tank body 50 from above in the vertical direction Dv.

The side wall-heat shield portions 61b are formed to cover the entire side surfaces 53a of the side wall portions 53 of the tank body 50 in the bow-stern direction FA and the ship width direction Dw. The side wall-heat shield portions 61b include contact surfaces 61c that face and are in contact with the side surfaces 53a of the side wall portions 53.

The ceiling-heat shield portion 61a and the side wall-heat shield portions 61b of the present embodiment are integrally formed.

A plurality of side wall grooves 54a, which are recessed from the contact surfaces 61c toward the side surfaces 16c of the inner surface 16 and extend in the vertical direction Dv, are formed on the side wall-heat shield portions 61b. Lower end portions of the side wall grooves 54a in the vertical direction Dv reach lower end portions of the side wall-heat shield portions 61b in the vertical direction Dv.

The guide portion 62 covers the entire bottom surface 52a of the outer surface of the tank body 50 from below in the vertical direction Dv. The guide portion 62 is connected to the lower end portions of the side wall-heat shield portions 61b of the heat shield portion 61 in the vertical direction Dv, and is formed integrally with the heat shield portion 61.

The guide portion 62 fulfills a heat insulating function to prevent natural heat from being input to the tank body 50 as with the heat shield portion 61. The guide portion 62 of the present embodiment is made of, for example, a material, such as polyurethane foam. The heat shield portion 61 and the guide portion 62 may not be made of polyurethane foam. Further, the heat shield portion 61 and the guide portion 62 may be made of different materials.

The guide portion 62 includes a guide surface 62a that faces the bottom surface 52a of the bottom portion 52 from below in the vertical direction Dv and guides ammonia leaking from the tank body 50.

The guide surface 62a is inclined to be positioned downward in the hold space R from the bow 14 toward the stern 15 in the bow-stern direction FA. For convenience, a state in which the floating main structure 10 does not trim (even trim state) is shown in Fig. 2. That is, the guide surface 62a is inclined with respect to an imaginary horizontal plane orthogonal to a direction of gravity.

The guide portion 62 includes a plurality of bottom grooves 54b that are recessed from the guide surface 62a toward the floor surface 16a and extend in the ship width direction Dw, and one middle groove 54c that is recessed from the guide surface 62a toward the floor surface 16a in the middle of the guide portion 62 and extend in the bow-stern direction FA. The middle groove 54c extends from a side of the guide portion 62 closer to the bow 14 to a side thereof closer to the stern 15 in the bow-stern direction FA. Each of end portions of the middle groove 54c closer to the bow 14 and the stern 15 in the bow-stern direction FA is connected to a lower end portion of at least one side wall groove in the vertical direction Dv among the plurality of side wall grooves 54a formed on the side wall-heat shield portions 61b.

The bottom grooves 54b extend to be collected at the middle groove 54c from the end portions of the guide portion 62 in the ship width direction Dw, and are connected to the middle groove 54c to join the middle groove 54c.

One end of each bottom groove 54b is connected to a lower end portion of the side wall groove 54a, which is formed on the side wall-heat shield portion 61b, in the vertical direction Dv. The other end of each bottom groove 54b is connected to the middle groove 54c.

Accordingly, the side wall grooves 54a of the side wall-heat shield portions 61b, the bottom grooves 54b of the guide portion 62, and the middle groove 54c form a groove 54 that continuously extends from the contact surfaces 61c of the side wall-heat shield portions 61b to the guide surface 62a of the guide portion 62.

As a result, even if minute cracks, holes, or the like are generated everywhere in the tank body 50 and ammonia leaks to exude from the inside of the tank body 50 to the outside of the tank body 50 via the minute cracks, holes, or the like, the leaking ammonia is moved from the side surfaces 53a to the bottom surface 52a along the groove 54 between the tank body 50 and the heat shield wall 60.

A hole portion 62c passing through the guide portion 62 from the guide surface 62a downward is formed in the guide portion 62. Specifically, the hole portion 62c is disposed at a portion of an inner wall surface of the middle groove 54c closer to the stern 15 in the bow-stern direction FA.

Accordingly, the ammonia, which has leaked from the tank body 50 and moved toward the bottom surface 52a along the side wall grooves 54a, directly flows into the middle groove 54c or flows into the middle groove 54c via the bottom grooves 54b. The ammonia having flowed into the middle groove 54c flows in the middle groove 54c along an incline, and then falls downward from the guide portion 62 via the hole portion 62c.

### (Receiving part)

The receiving part 70 receives and accumulates the ammonia having leaked from the tank 41. The receiving part 70 is disposed below the tank 41 to cover the entire guide portion 62 of the heat shield wall 60 from below.

The receiving part 70 includes a receiving surface 71 and a recess 72 that is formed closer to the stern 15 than the receiving surface 71 in the bow-stern direction FA. The receiving part 70 of the present embodiment also serves as the floor surface 16a of the inner surface 16 of the floating main structure 10.

In a case where liquefied ammonia having leaked from the guide portion 62 of the heat shield wall 60 of the tank body 50 falls onto the receiving surface 71, the receiving surface 71 is a surface as a secondary barrier that receives this liquefied ammonia and guides the received liquefied ammonia to the recess 72.

The secondary barrier of the present embodiment means a barrier that is provided to prevent a member forming the floating main structure 10 other than the tank 41 from being damaged since the temperature of the member drops in a case where the liquefied ammonia having leaked from the tank body 50 is in contact with the member.

The receiving surface 71 is made of a material (low-temperature steel) of which toughness is not reduced even in a low-temperature state as with the tank body 50. The top surface 16b and the side surfaces 16c of the inner surface 16 of the present embodiment are made of metal or the like other than low-temperature steel. Here, the floating main structure 10, which is sailing, is inclined with respect to the horizontal plane to sink downward in the vertical direction Dv from the bow 14 toward the stern 15. That is, the floating main structure 10 sails in a stern trim state.

Accordingly, the receiving surface 71 is inclined to be positioned downward from the bow 14 toward the stern 15 in the bow-stern direction FA (an aspect of inclination is not shown). The state of the inclination of the receiving surface 71 is not shown in the drawings. Accordingly, the liquefied ammonia having fallen onto the receiving surface 71 is moved toward the stern 15 along the incline of the receiving surface 71.

The recess 72 is a pit (well) as a secondary barrier that is formed to be recessed from the receiving surface 71 in the vertical direction Dv. The recess 72 is formed to be capable of storing the ammonia having leaked from the tank 41. The recess 72 is made of a material (low-temperature steel) of which toughness is not reduced even in a low-temperature state as with the tank body 50. In a case where the liquefied ammonia having leaked is accumulated in the recess 72, the material (low-temperature steel) of the recess 72 is cooled and the temperature of the recess 72 drops.

The recess 72 of the present embodiment includes an opening portion 72a open to the inside of the hold space R. The opening portion 72a is positioned below the hole portion 62c that is provided at an end portion of the guide portion 62 closer to the stern 15 in the bow-stern direction FA.

Here, the guide surface 62a of the guide portion 62 of the heat shield wall 60 is inclined to approach the recess 72 toward the recess 72.

### (Pump)

The pump 80 is a diaphragm pump that is provided in the recess 72. The pump 80 pumps the ammonia, which is accumulated in the recess 72, to the outside of the recess 72. The drive of the pump 80 is controlled by a pump drive device 102 that is provided outside the recess 72.

The pump 80 of the present embodiment can pump liquefied ammonia of which the amount is larger than the amount of liquefied ammonia leaking from the tank per unit time to the outside of the recess 72 per unit time.

Here, since the pump 80 is a diaphragm pump that is a type of positive displacement pump, the pump 80 can idle. Idling in the present embodiment means that the pump 80 continues to perform a normal suction operation even though liquefied ammonia as driving liquid (driving fluid) is not introduced into the pump 80. That is, the pump 80 can be operated without causing an abnormality, such as galling or seizure, even in a case where there is no liquefied ammonia in the recess 72.

### (Return line)

The return line 90 is a pipe returning ammonia, which is accumulated in the recess 72 and is to be pumped by the pump 80, into the tank body 50. One end of the return line 90 is connected to the pump 80. The other end of the return line 90 penetrates the heat shield portion 61 of the heat shield wall 60 of the tank 41 and the ceiling portion 51 of the tank body 50 to extend into the tank body 50.

Here, the return line 90 is not connected to the supply line 111 (another line) and the return line 112 (another line) that connect the tank 41 and the combustion device 30. That is, the ammonia flowing in the return line 90 does not directly flow into the supply line 111 and the return line 112. That is, the return line 90 is provided in the hold space R independently of the supply line 111 and the return line 112.

### (Leak detecting unit)

The leak detecting unit 100 detects that the liquefied ammonia having leaked from the tank 41 is accumulated in the recess 72, and drives the pump 80 on the basis of detection information.

The leak detecting unit 100 includes a leak sensor 101 and a pump drive device 102.

The leak sensor 101 is a temperature sensor that is provided on a wall surface of the recess 72. The leak sensor 101 acquires the temperature of the wall surface of the recess 72 as temperature data at predetermined time intervals, and transmits signals indicating the temperature data to the pump drive device 102 that is provided outside the recess 72. The leak sensor 101 and the pump drive device 102 are connected to each other by wire or wirelessly.

The pump drive device 102 is a device that acquires temperature information from the temperature data of the wall surface of the recess 72 acquired by the leak sensor 101 and controls the drive of the pump 80 on the basis of the temperature information.

Specifically, in a case where it is detected that a temperature acquired from the leak sensor 101 is equal to or lower than a predetermined threshold value, the pump drive device 102 determines that the liquefied ammonia is accumulated in the recess 72 and transmits a signal to instruct the pump 80 to drive to the pump 80.

In a case where the pump 80 receives the signal, which instructs the pump 80 to drive, transmitted from the pump drive device 102, the pump 80 pumps the liquefied ammonia, which is accumulated in the recess 72, to the tank 41 via the return line 90.

The pump 80 continues to idle (continues to perform a suction operation) even after pumping the liquefied ammonia accumulated in the recess 72.

The drive of the pump 80 of the present embodiment is stopped at a suitable timing by an artificial operation.

In a case where the leak sensor 101 detects that the temperature acquired from the leak sensor 101 is higher than a predetermined threshold value, the pump drive device 102 may determine that liquefied ammonia is not accumulated in the recess 72 and transmit a signal for stopping drive (idling) to the pump 80. In this case, the pump 80 stops driving when receiving the signal for stopping drive, which is transmitted from the pump drive device 102.

### (Effects)

According to the configuration of the floating structure 1 according to the embodiment, the ammonia having leaked from the tank 41 falls onto the receiving part 70 and is accumulated in the recess 72 of the receiving part 70. The ammonia accumulated in the recess 72 of the receiving part 70 is pumped via the return line 90 by the pump 80 and is returned into the tank body 50. Accordingly, the ammonia, which leaks from the tank 41 and is accumulated in the receiving part 70, can be efficiently recovered.

Further, according to the configuration of the floating structure 1 according to the embodiment, since the receiving part 70 is the floor surface 16a of the inner surface 16, the receiving part 70 can be formed without an increase in the number of components of the floating structure 1.

Further, according to the configuration of the floating structure 1 according to the embodiment, the pump 80 is driven on the basis of the detection information of the leak sensor 101. Accordingly, the ammonia accumulated in the recess 72 can be returned into the tank body 50 at a suitable timing.

Furthermore, according to the configuration of the floating structure 1 according to the embodiment, since the pump 80 can pump liquefied ammonia of which the amount is larger than the amount of liquefied ammonia leaking from the tank body 50 per unit time to the outside of the recess 72 per unit time, the accumulation of ammonia in the recess 72 can be suppressed. Accordingly, the evaporation of the ammonia, which is moved into the recess 72 from the inside of the tank body 50, in the hold space R can be suppressed.

Moreover, according to the configuration of the floating structure 1 according to the embodiment, the liquefied ammonia having leaked from the tank body 50 is guided toward the bottom surface 52a of the tank body 50 along the groove 54 between the tank body 50 and the heat shield portion 61. The liquefied ammonia guided toward the bottom surface 52a falls into the recess 72 of the receiving part 70 via the hole portion 62c that is formed at the middle groove 54c of the guide portion 62 of the heat shield wall 60. Accordingly, the ammonia having leaked from the tank body 50 can be efficiently guided into the recess 72.

Further, since the guide surface 62a of the guide portion 62 is inclined to approach the recess 72 toward the recess 72, the falling of the liquefied ammonia onto the receiving surface 71 can be suppressed. Accordingly, a region of the secondary barrier, which is made of low-temperature steel, of the receiving surface 71 can be reduced, so that cost required to manufacture the floating structure 1 can be reduced.

Furthermore, according to the configuration of the floating structure 1 according to the embodiment, the supply line 111 and the return line 112 in which ammonia can flow are connected to the tank 41 and the return line 90 is independent of the supply line 111 and the return line 112 serving as other lines. That is, in a case where ammonia accumulated in the recess 72 flows toward the tank 41, the ammonia does not flow into the supply line 111 and the return line 112. Accordingly, in a case where the pump 80 returns ammonia to the tank 41 via the return line 90, it is not necessary to stop the flowing of ammonia from the tank 41 to the combustion device 30 via the supply line 111 and the flowing of ammonia from the combustion device 30 to the tank 41. Therefore, for example, ammonia having leaked from the tank 41 can continue to be returned to the tank 41 via the return line 90 in a state where the pump 80 is constantly driven.

Moreover, according to the configuration of the floating structure 1 according to the embodiment, since the pump 80 can idle, ammonia having leaked from the tank 41 is immediately returned to the tank 41 even though the ammonia having leaked from the tank 41 is moved into the recess 72 of the receiving part 70. Accordingly, the evaporation of the ammonia, which is moved into the recess 72, in the hold space R can be further suppressed.

### [Other embodiments]

The embodiment of the present disclosure has been described in detail above with reference to the drawings. However, specific configuration is not limited to the configuration of the embodiment, and additions, omissions, and substitutions of components and other modifications can be made without departing from the scope of the present disclosure. Further, the present disclosure is not limited by the embodiment, and is limited only by the claims.

The floating structure 1 has been a ship using ammonia as fuel in the embodiment, but is not limited to the ship using ammonia as fuel. The floating structure 1 may use liquefied gas, such as LNG or LPG, as fuel. That is, the tank 41 is not limited to the configuration for storing ammonia, and the tank 41 may be adapted to store liquefied gas, such as LNG or LPG.

Further, the ceiling portion 51 of the tank body 50 of the embodiment may include a ceiling portion body that forms the upper surface 51a, and a trunk top that extends upward from the upper surface 51a of the ceiling portion body in the vertical direction Dv. In a case where the ceiling portion 51 includes the trunk top and the trunk top is provided outside the hold space R, the ceiling-heat shield portion 61a may not be formed on the trunk top.

Further, the guide surface 62a of the embodiment is inclined to be positioned downward from the bow 14 toward the stern 15 in the bow-stern direction FA in a state where the floating main structure 10 does not trim as shown in Fig. 2, but is not limited to this configuration. The guide surface 62a may be adapted to be inclined with respect to the horizontal plane only by a stern trim while the floating main structure 10 sails.

Furthermore, the return line 90 is provided independently of the supply line 111 and the return line 112 in the embodiment, but is not limited to this configuration. That is, the return line 90 may be connected to the supply line 111 or the return line 112. That is, the inside of the pipeline of the return line 90 and the inside of the pipelines of the supply line 111 and the return line 112 may communicate with each other.

Moreover, the pump 80 of the embodiment is not limited to a diaphragm pump that is a type of positive displacement pump. The pump 80 may be, for example, another positive displacement pump, such as a piston pump, or a non-positive displacement pump.

Further, the supply line 111 and the return line 112 have been described as other lines in the embodiment, but the other lines are not limited thereto. The other line may be, for example, a cargo line that is connected to the tank 41 during bunkering or the like and can supply ammonia, which is supplied from, for example, a bunkering station or the like outside the floating structure 1, into the tank 41. Even in this case, the return line 90 is not connected to the cargo line, that is, the return line 90 is independent of the cargo line, and the return line 90 may be adapted such that ammonia flowing in the return line 90 does not flow into the cargo line.

Furthermore, the leak sensor 101 of the leak detecting unit 100 is a temperature sensor in the embodiment, but is not limited to a temperature sensor. The leak sensor 101 may be a level sensor that acquires the height of the liquid surface of the liquefied gas accumulated in the recess 72, a liquefied gas sensor that acquires the concentration of the liquefied gas in the atmosphere inside the hold space R, or the like. In this case, the pump drive device 102 of the leak detecting unit 100 may acquire detection information from detection data acquired by the leak sensor 101 and transmit a signal, which instructs the pump 80 to drive, to the pump 80 on the basis of the detection information.

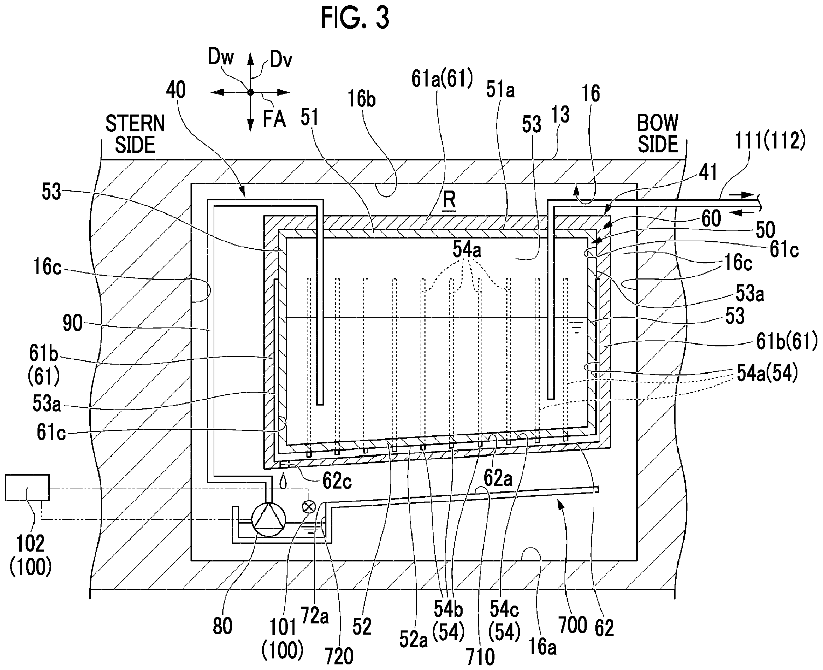

Moreover, as shown in Fig. 3, the fuel storage unit 40 of the floating structure 1 may further include a drip pan as a receiving part 700 that is disposed below the tank 41 to cover the tank 41 from below and includes a receiving surface 710 and a recess 720 recessed from the receiving surface 710. In this case, the floor surface 16a described in the embodiment may not be the receiving part 70. The same effects as described above can be obtained even from this.

### [Supplementary note]

For example, the floating structure described in the embodiment is ascertained as follows.
(1) A floating structure 1 according to a first aspect includes: a floating main structure 10; a tank 41 that is provided in the floating main structure 10 and includes a tank body 50 capable of storing liquefied gas therein and a heat shield wall 60 covering an outer surface of the tank body 50; a receiving part 70, 700 that is disposed below the tank 41 to cover the tank 41 from below and includes a receiving surface 71, 710 and a recess 72, 720 recessed from the receiving surface 71, 710; a pump 80 that is provided in the recess 72, 720; and a return line 90 that returns the liquefied gas pumped by the pump 80 into the tank body 50.
   Accordingly, liquefied gas having leaked from the tank 41 falls onto the receiving part 70, 700 and is accumulated in the recess 72, 720 of the receiving part 70, 700. The liquefied gas accumulated in the recess 72, 720 of the receiving part 70, 700 is pumped via the return line 90 by the pump 80 and is returned into the tank body 50.
(2) According to a second aspect, in the floating structure 1 of (1), the floating main structure 10 includes an inner surface 16 that partitions off a hold space R in which the tank 41 is accommodated, and the receiving part 70 may be a floor surface 16a of the inner surface 16.
   Accordingly, since the receiving part 70 is the floor surface 16a of the inner surface 16 of the floating main structure 10, the number of components of the floating structure 1 is not increased.
(3) According to a third aspect, the floating structure 1 of (1) or (2) may further include a leak sensor 101 detecting that the liquefied gas is accumulated in the recess 72, 720, and the pump 80 may be driven on the basis of detection information of the leak sensor 101.
   Accordingly, the pump 80 can be driven on the basis of the detection information of the leak sensor 101.
(4) According to a fourth aspect, the floating structure 1 of any one of (1) to (3) may further include another line which is connected to the tank 41 and in which the liquefied gas is capable of flowing, and the return line 90 may be independent of the other line.
   Accordingly, in a case where the ammonia accumulated in the recess 72, 720 flows toward the tank 41 via the return line 90, the ammonia does not flow into the other line.
(5) According to a fifth aspect, in the floating structure 1 of any one of (1) to (4), the pump 80 may be capable of idling.

Accordingly, even though the liquefied gas having leaked from the tank 41 is moved into the recess 72, 720 of the receiving part 70, 700, the liquefied gas is immediately returned to the tank 41 by the pump 80 that is idling.

### Industrial Applicability

According to the floating structure of the embodiment of the present disclosure, liquefied gas having leaked from the tank can be efficiently recovered.

### Reference Signs List

1: floating structure
10: floating main structure
11A, 11B: ship side
12: bottom
13: upper deck
14: bow
15: stern
16: inner surface
16a: floor surface
16b: top surface
16c, 53a: side surface
20: superstructure
30: combustion device
40: fuel storage unit
41: tank
50: tank body
51: ceiling portion
51a: upper surface
52: bottom portion
52a: bottom surface
53: side wall portion
54: groove
54a: side wall groove
54b: bottom groove
60: heat shield wall
61: heat shield portion
62: guide portion
62a: guide surface
62c: hole portion
70, 700: receiving part
71, 710: receiving surface
72, 720: recess
72a: opening portion
80: pump
90: return line
100: leak detecting unit
101: leak sensor
102: pump drive device
110: fuel supply system
111: supply line
112: return line
140: flue gas duct
Dv: vertical direction
Dw: ship width direction
FA: bow-stern direction
G: exhaust gas
R: hold space

## Claims

1. A floating structure (1) comprising:
a floating main structure (10);
a tank (41) that is provided in the floating main structure (10) and includes a tank body (50) capable of storing liquefied gas therein;
a receiving part (70, 700) that is disposed below the tank (41) to cover the tank (41) from below and includes a receiving surface (71, 710) and a recess (72, 720) recessed from the receiving surface (71, 710);
a pump (80) that is provided in the recess (72, 720); and
a return line (90) that is connected to the pump (80), **characterized in that**
the tank (41) includes a heat shield wall (60) covering an outer surface of the tank body (50), and
the return line (90) returns the liquefied gas pumped by the pump (80) into the tank body (50).

2. The floating structure (1) according to claim 1,
wherein the floating main structure (10) includes an inner surface (16) that partitions off a hold space (R) in which the tank (41) is accommodated, and
the receiving part (70) is a floor surface (16a) of the inner surface (16).

3. The floating structure (1) according to claim 1 or 2, further comprising:
a leak sensor (101) detecting that the liquefied gas is accumulated in the recess (72, 720),
wherein the pump (80) is driven on the basis of detection information of the leak sensor (101).

4. The floating structure (1) according to any one of Claims 1 to 3, further comprising:
another line (111, 112) which is connected to the tank (41) and in which the liquefied gas is capable of flowing,
wherein the return line (90) is independent of the other line (111, 112).

5. The floating structure (1) according to any one of Claims 1 to 4, wherein the pump (80) is capable of idling.

## Patentansprüche

1. Schwimmende Struktur (1), die Folgendes umfasst:
eine schwimmende Hauptstruktur (10);
einen Tank (41), der in der schwimmenden Hauptstruktur (10) bereitgestellt ist und einen Tankkörper (50) beinhaltet, der in der Lage ist, verflüssigtes Gas darin zu speichern;
ein Aufnahmeteil (70, 700), das unterhalb des Tanks (41) angeordnet ist, um den Tank (41) von unten abzudecken, und eine Aufnahmefläche (71, 710) und eine von der Aufnahmefläche (71, 710) vertiefte Ausnehmung (72, 720) einschließt;
eine Pumpe (80), die in der Ausnehmung (72, 720) bereitgestellt ist; und
eine Rücklaufleitung (90), die mit der Pumpe (80) verbunden ist, **dadurch gekennzeichnet, dass**
der Tank (41) eine Hitzeschildwand (60) einschließt, die eine Außenfläche des Tankkörpers (50) bedeckt, und
die Rücklaufleitung (90) das von der Pumpe (80) gepumpte Flüssiggas in den Tankkörper (50) zurückführt.

2. Schwimmende Struktur (1) nach Anspruch 1, wobei die schwimmende Hauptstruktur (10) eine Innenfläche (16) einschließt, die einen Halteraum (R) abtrennt, in dem der Tank (41) untergebracht ist, und
der Aufnahmeteil (70) eine Bodenfläche (16a) der Innenfläche (16) ist.

3. Schwimmende Struktur (1) nach Anspruch 1 oder 2, die ferner umfasst:
einen Lecksensor (101), der erfasst, dass sich das verflüssigte Gas in der Ausnehmung (72, 720) angesammelt hat,
wobei die Pumpe (80) auf der Grundlage von Erfassungsinformationen des Lecksensors (101) angetrieben wird.

4. Schwimmende Struktur (1) nach einem der Ansprüche 1 bis 3, ferner umfassend:
eine weitere Leitung (111, 112), die mit dem Tank (41) verbunden ist und in der das verflüssigte Gas strömen kann,
wobei die Rücklaufleitung (90) unabhängig von der anderen Leitung (111, 112) ist.

5. Schwimmende Struktur (1) nach einem der Ansprüche 1 bis 4, wobei die Pumpe (80) im Leerlauf betrieben werden kann.

## Revendications

1. Structure flottante (1) comprenant :
une structure principale flottante (10) ;
un réservoir (41) prévu dans la structure principale flottante (10) et comprenant un corps de réservoir (50) capable de stocker du gaz liquéfié à l'intérieur ;
une pièce de réception (70, 700) disposée sous le réservoir (41) pour couvrir le réservoir (41) par le bas et comprenant une surface de réception (71, 710) et un renfoncement (72, 720) en retrait de la surface de réception (71, 710) ;
une pompe (80) prévue dans le renforcement (72, 720) ; et
une conduite de retour (90) qui est reliée à la pompe (80), **caractérisée en ce que**
le réservoir (41) comprend une paroi de protection thermique (60) couvrant une surface extérieure du corps de réservoir (50), et
la conduite de retour (90) renvoie le gaz liquéfié pompé par la pompe (80) dans le corps de réservoir (50).

2. Structure flottante (1) selon la revendication 1,
dans laquelle la structure principale flottante (10) comprend une surface intérieure (16) qui sépare un espace de retenue (R) dans lequel le réservoir (41) est logé, et
la pièce de réception (70) est une surface de plancher (16a) de la surface intérieure (16).

3. Structure flottante (1) selon la revendication 1 ou 2, comprenant en outre :
un capteur de fuite (101) détectant que le gaz liquéfié est accumulé dans le renfoncement (72, 720),
dans laquelle la pompe (80) est entraînée à partir des informations de détection du capteur de fuite (101).

4. Structure flottante (1) selon l'une des revendications 1 à 3, comprenant en outre :
une autre conduite (111, 112) reliée au réservoir (41) et dans laquelle le gaz liquéfié peut circuler,
dans laquelle la conduite de retour (90) est indépendante de l'autre conduite (111, 112).

5. Structure flottante (1) selon l'une des revendications 1 à 4, dans laquelle la pompe (80) peut tourner au ralenti.
